# FASCICULE DE BREVET EUROPEEN

(11) **EP 3 937 464 B1**
(45) Date de publication et mention de la délivrance du brevet: **26.04.2023**
(21) Numéro de dépôt: 21184555.7
(22) Date de dépôt: 08.07.2021
(51) Int. Cl.: H04L 9/40, G06F 21/62, G06F 21/64

(54) **PROCÉDÉ DE LABELLISATION D'OBJETS DANS UN ENVIRONNEMENT DE TRAITEMENT DE GRANDS VOLUMES DE DONNÉES ET SYSTÈME DE LABELLISATION ASSOCIÉ**
VERFAHREN ZUR KENNZEICHNUNG VON OBJEKTEN IN EINER DATENVERARBEITUNGSUMGEBUNG GROSSER VOLUMEN UND ENTSPRECHENDES KENNZEICHNUNGSSYSTEM
METHOD FOR LABELLING OBJECTS IN AN ENVIRONMENT FOR PROCESSING LARGE VOLUMES OF DATA AND ASSOCIATED LABELLING SYSTEM

(30) Priorité: 08.07.2020 FR 2007216
(43) Date de publication de la demande: 12.01.2022
(73) Titulaire: THALES, 92400 Courbevoie (FR)
(72) Inventeur: WIOREK, Jean-François, 78141 VELIZY CEDEX (FR)
(74) Mandataire: Lavoix

(56) Documents cités:
- US-A1- 2005 097 357
- US-A1- 2020 195 693

## Description

La présente invention concerne un procédé de labellisation d'objets dans un environnement de traitement de grands volumes de données.

La présente invention concerne également un système de labellisation associé à ce procédé.

L'invention se situe dans le domaine technique des méthodes de traitement et de sécurisation de grands volumes de données. Ce type de données est connu plus couramment sous l'appellation anglaise de « Big Data » qui est également traduite dans certains cas par le terme « mégadonnées » ou « données massives ».

De manière générale, les données de type Big Data présentent des données dont le volume ne permet pas de les traiter de manière efficace par un être humain ni par toute autre méthode d'automatisation classique.

Ainsi, dans l'état de la technique, il existe de nombreuses méthodes de traitement conçues spécialement pour ce type de données.

Certaines de ces méthodes peuvent être réunies entre elles pour former un environnement particulier de traitement de données de type Big Data.

Autrement dit, par « environnement de traitement de grands volumes de données », on entend un ensemble de méthodes et d'outils de traitement de ces données réunis selon un certain critère. Un tel critère peut concerner par exemple la manière d'utilisation de ces méthodes et outils, l'interface d'interaction avec l'utilisateur, le domaine d'application, etc. Un exemple d'un tel environnement de traitement est l'environnement Hadoop.

Il va de soi que, pour être efficaces, les méthodes de traitement de données de type Big Data doivent pouvoir utiliser l'ensemble des données disponibles.

Toutefois, cette nécessité se heurte à des problèmes de sécurité lorsque les données présentent des sensibilités différentes.

En effet, selon les méthodes de l'état de la technique, on procède généralement à un cloisonnement de données de sensibilités différentes pour préserver leur confidentialité. Autrement dit, selon ces méthodes, des données de sensibilités différentes sont traitées de manière séparée.

On conçoit alors que le cloisonnement de données va à l'encontre des méthodes de traitement de données de type Big Data qui nécessitent au contraire la prise en compte d'un maximum de données.

La présente invention a pour but de permettre le traitement de données de type Big Data en respectant leur confidentialité et cela sans cloisonnement séparant les données de sensibilités différentes.

À cet effet, l'invention propose un procédé et un système comme définis dns les revendication 1 et 10. Les revendications dépendantes concernent des implémentations particulières.

Les caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système de labellisation selon l'invention ; et
- [Fig 2] la figure 2 est un organigramme d'un procédé de labellisation selon l'invention, le procédé de labellisation étant mis en oeuvre par le système de labellisation de la figure 1.

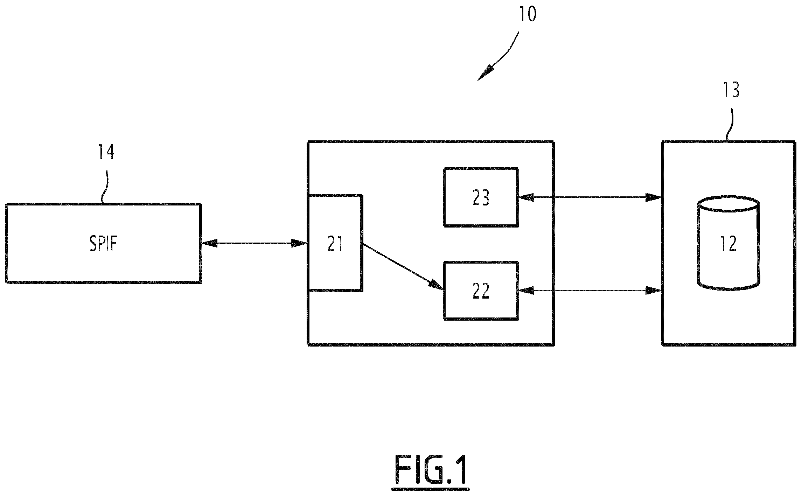

Le système de labellisation 10 de la figure 1 permet de labelliser des objets dans un environnement de traitement 13 de grands volumes de données selon une politique de labellisation.

Comme expliqué précédemment, l'environnement de traitement 13 de grands volumes de données présente un ensemble de méthodes et d'outils adaptés pour traiter les données de type Big Data désignées sur la figure 1 par la référence numérique 12. Un exemple d'un tel environnement est l'environnement Hadoop.

Par « objet » dans un tel environnement de traitement, on entend une unité minimale sur laquelle le traitement est effectué. Cela peut être par exemple un fichier, un groupe de fichiers ou toute autre entité élémentaire comme par exemple l'objet connu sous le terme « datastore » ou l'objet connu sous le terme « dataset ».

De manière connue en soi, l'environnement de traitement 13 de données de type Big Data définit un certain nombre d'éléments permettant de gérer l'accès aux objets par des utilisateurs.

Parmi ces éléments, il existe notamment des éléments appelés « marqueurs » pouvant être associés à chaque objet. Ainsi, chaque marqueur définit des règles d'accès à l'objet auquel il est associé. Dans l'environnement Hadoop, les marqueurs sont connus sous l'appellation « TAG » ou « TAG ATLAS ».

Il existe également des éléments appelés « groupes d'utilisateurs » permettant de définir des utilisateurs ayant des droits d'accès équivalents. Dans l'environnement Hadoop, les groupes d'utilisateurs sont connus sous l'appellation « User Groupe ».

Finalement, il existe également des éléments appelés « règles d'accès » permettant d'associer à un marqueur les conditions d'accès vis-à-vis de groupes d'utilisateurs. Dans l'environnement Hadoop, les règles d'accès sont connues sous l'appellation « Policy Ranger ».

En particulier, chaque règle d'accès présente, pour un marqueur donné, au moins une autorisation d'accès et/ou une interdiction d'accès. Chaque autorisation d'accès (connue sous l'appellation anglaise « Allow ») ou chaque interdiction d'accès (connue sous l'appellation anglaise « Deny ») permet d'autoriser ou d'interdire à un moins un groupe d'utilisateurs une action en relation avec le marqueur. Cette action peut comprendre le droit de lecture ou d'écriture ou d'exécution.

Comme indiqué précédemment, le système de labellisation 10 selon l'invention permet de labelliser les objets de l'environnement 13 selon une politique de labellisation.

En particulier, par « politique de labellisation », on entend un ensemble d'attributs de sécurité et de règles d'association de ces attributs.

Selon l'invention une telle politique de labellisation est décrite dans un fichier de type SPIF (de l'anglais « Security Policy Information File ») désigné sur la figure 1 par la référence numérique 14. Les fichiers de type SPIF imposent donc un format spécifique de description d'une politique de labellisation.

Selon ce format, chaque attribut présente un type choisi parmi le type classification, le type restrictif ou le type permissif.

Les attributs de type classification, appelés également attributs de confidentialité, définissent un niveau hiérarchique entre eux.

En particulier, chaque attribut de type classification définit une valeur correspondant au niveau hiérarchique de cet attribut qui permet d'accéder à chaque attribut de type classification d'un niveau hiérarchique inférieur ou égal à ce niveau hiérarchique.

Par exemple les attributs désignant le niveau d'habilitation d'un utilisateur, à savoir « NP » (non-protégé), « DR » (diffusion restreinte), « CD » (confidentiel défense), « SD » (secret défense) et « TS » (très secret défense), définissent chacune une valeur choisie parmi les valeurs « NP », « DR », « CD », « SD » et « TS ». Le niveau hiérarchique entre les attributs ayant des valeurs différentes est choisi selon la règle suivante : NP<DR<CD<SD<TS.

Chaque attribut de type restrictif définit une liste de valeurs et une condition d'accès avec une logique de « ET » entre les valeurs de cette liste.

Chaque attribut de type permissif définit une liste de valeurs et une condition d'accès avec une logique de « OU » entre les valeurs de cette liste.

En référence à la figure 1, le système de labellisation 10 comprend un module d'entrée 21, un module de traitement 22 et un module de sécurisation 23.

Le module d'entrée 21 permet de recevoir le fichier de type SPIF 14 et de lire la politique de confidentialité décrite dans ce fichier 14.

Le module de traitement 22 permet d'interpréter la politique de confidentialité décrite dans le fichier 14 afin de la transposer sur l'environnement de traitement 13, par exemple Hadoop, des données 12. Autrement dit, le module de traitement 22 permet de labelliser les données 12 conformément à la politique de confidentialité décrite dans le fichier 14.

Le module de sécurisation 23 permet de sécuriser la labellisation effectuée par le module de traitement 22.

Les modules 21, 22, 23 se présentent par exemple au moins partiellement sous la forme des logiciels. Dans ce cas, ces logiciels sont mis en oeuvre notamment par au moins un processeur (non-représenté) du système 10 en utilisant par exemple une mémoire vive (non-représentée) de ce système 10.

Selon un autre exemple de réalisation, au moins un de ces modules 21, 22, 23 se présente au moins partiellement sous la forme d'un circuit logique programmable, tel que par exemple un circuit de type FPGA (de l'anglais « Field-Programmable Gate Array »).

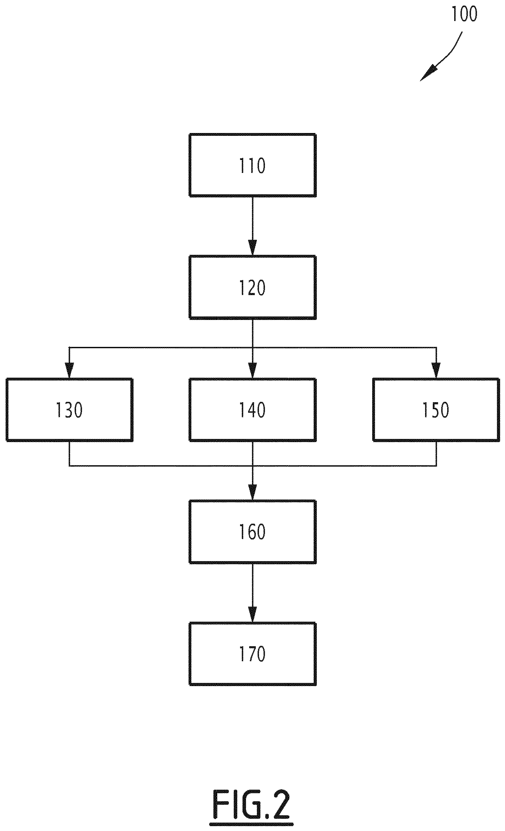

Le procédé de labellisation 100 mis en oeuvre par le système de labellisation 10 sera désormais expliqué en référence à la figure 2 présentant un organigramme de ses étapes.

Initialement, il est considéré que le fichier de type SPIF 14 décrivant une politique de labellisation est fourni. Le module d'entrée 21 reçoit alors ce fichier et en extrait l'ensemble des attributs ainsi que les règles d'association correspondante.

Lors d'une étape initiale 110 du procédé, le module de traitement 22 crée dans l'environnement de traitement 13 un marqueur pour chaque attribut de chaque type dudit fichier 14.

Le nom de chaque marqueur ainsi créé présente par exemple une concaténation d'un terme spécifique (par exemple « TAG » dans l'environnement Hadoop) avec le nom de la politique de labellisation et le nom de l'attribut correspondant.

Par exemple, pour la politique de labellisation appelée « FRANCE » et définissant les attributs « NP », « DR », « CD », « SD » et « TS » comme définis précédemment, les marqueurs suivants sont créés :
TAG_FRANCE_NP ;
TAG_FRANCE_DR ;
TAG_FRANCE_CD ;
TAG_FRANCE_SD ;
TAG_FRANCE_TS.

Lors de l'étape suivante 120, le module de traitement 22 crée dans l'environnement de traitement 13 un groupe d'utilisateurs pour chaque attribut dudit fichier 14.

Comme dans le cas précédent, le nom de chaque groupe d'utilisateurs ainsi créé présente par exemple une concaténation d'un terme spécifique (par exemple « G » dans l'environnement Hadoop) avec le nom de la politique de labellisation et le nom de l'attribut correspondant.

Dans le précédent exemple de la politique de labellisation appelée « FRANCE » et définissant les attributs « NP », « DR », « CD », « SD » et « TS », les groupes d'utilisateurs suivants sont créés :
G_FRANCE_NP ;
G_FRANCE_DR ;
G_FRANCE_CD ;
G_FRANCE_SD ;
G_FRANCE_TS.

Puis, lors des étapes 130, 140 et 150 mises en oeuvre par exemple en parallèle, le module de traitement 22 définit des règles d'accès pour chaque type d'attribut en fonction des règles d'association correspondantes.

En particulier, lors de l'étape 130, le module de traitement 22 définit des règles d'accès pour chaque attribut de type classification.

Pour ce faire, le module de traitement 22 détermine pour chaque marqueur correspondant à un attribut de type classification une règle d'accès définissant au moins un groupe d'utilisateurs autorisé à accéder à un objet associé au marqueur.

En particulier, chaque règle d'accès définie lors de cette étape comporte une autorisation d'accès pour chaque groupe d'utilisateurs correspondant à un attribut de type classification de niveau hiérarchique supérieur ou égal au niveau hiérarchique de l'attribut de type classification correspondant au marqueur pour lequel cette règle d'accès est déterminée.

De manière équivalente, chaque règle d'accès peut comporter une interdiction d'accès pour chaque groupe d'utilisateurs correspondant à un attribut de type classification de niveau hiérarchique inférieur au niveau hiérarchique de l'attribut de type classification correspondant au marqueur pour lequel cette règle d'accès est déterminée.

Encore de manière équivalente, chaque règle d'accès peut comporter des autorisations d'accès et des interdictions d'accès.

Également, comme dans le cas précédent, le nom de chaque règle d'accès ainsi créée présente par exemple une concaténation d'un terme spécifique (par exemple « P » dans l'environnement Hadoop) avec le nom de la politique de labellisation et le nom de l'attribut correspondant.

Dans le précédent exemple de la politique de labellisation appelée « FRANCE » et définissant les attributs « NP », « DR », « CD », « SD » et « TS », les politiques suivantes sont créées :
P_FRANCE_NP ;
P_FRANCE_DR;
P_FRANCE_CD ;
P_FRANCE_SD ;
P_FRANCE_TS.

En complément, lors de la même étape 130, le module de traitement 22 détermine en outre pour l'autorisation d'accès de chaque règle d'accès un ou plusieurs types d'action autorisés en relation avec l'objet auquel cette autorisation est appliquée. Au moins un type d'action est par exemple déterminé pour chaque groupe d'utilisateurs mentionné dans la règle d'accès correspondante.

En particulier, chaque type d'action est choisi dans la liste comprenant :
- lecture ;
- écriture ;
- exécution.

Pour les règles d'accès déterminées pour les marqueurs correspondant aux attributs de type classification, chaque type d'action pour chaque groupe d'utilisateurs est par exemple choisi en fonction du niveau hiérarchique de l'attribut de type classification correspondant à ce groupe d'utilisateurs.

Ainsi, par exemple, l'action « écriture » est choisie uniquement pour le groupe d'utilisateurs correspondant à l'attribut de type classification du même niveau hiérarchique que l'attribut de type classification du marqueur correspondant.

En revanche, l'action « lecture » est par exemple choisie pour chaque groupe d'utilisateurs correspondant à l'attribut de type classification de niveau hiérarchique supérieur ou égal que le niveau hiérarchique de l'attribut de type classification du marqueur correspondant. Il est par exemple de même en ce qui concerne l'action « exécution ».

En prenant en compte le niveau hiérarchique NP<DR<CD<SD<TS, la règle d'accès P_FRANCE_NP peut être par exemple formulée selon le tableau suivant :

| | | |
|---|---|---|
| Nom de la politique | P_FRANCE_NP | |
| Pour le marqueur | TAG_FRANCE_NP | |
| Autorisation d'accès pour les groupes d'utilisateurs | G_FRANCE_NP | lecture, écriture, exécution |
| | G_FRANCE_DR | lecture, exécution |
| | G_FRANCE_CD | lecture, exécution |

| | | |
|---|---|---|
| | G_FRANCE_SD | lecture, exécution |
| | G_FRANCE_TS | lecture, exécution |

De manière analogue, la règle d'accès P_FRANCE_SD peut être par exemple formulée selon le tableau suivant :

| | | |
|---|---|---|
| Nom de la politique | P_FRANCE_SD | |
| Pour le marqueur | TAG_FRANCE_SD | |
| Autorisation d'accès pour les groupes d'utilisateurs | G_FRANCE_SD | lecture, écriture, exécution |
| | G_FRANCE_TS | lecture, exécution |

Lors de l'étape 140, le module de traitement 22 définit une règle d'accès en relation avec chaque attribut de type restrictif.

En particulier, le module de traitement 22 détermine pour chaque marqueur correspondant à un attribut de type restrictif une règle d'accès comprenant une autorisation d'accès pour le groupe d'utilisateurs correspondant au même attribut de type restrictif.

Autrement dit, chaque règle d'accès déterminée lors de cette étape pour un marqueur donne une autorisation d'accès au groupe d'utilisateurs correspondant au même attribut, c'est-à-dire à la même liste de valeurs, que ledit marqueur.

Lors de l'étape 150, le module de traitement 22 définit une règle d'accès en relation avec chaque attribut de type permissif.

En particulier, le module de traitement 22 détermine pour chaque marqueur correspondant à un attribut de type permissif une règle d'accès comprenant une autorisation d'accès pour chaque groupe d'utilisateurs correspondant à au moins l'une des valeurs de la liste de valeurs définie par cet attribut de type permissif.

Tout comme dans l'étape 130, lors des étapes 140 et 150, il est également possible de déterminer au moins un type d'action pour chaque autorisation d'accès et éventuellement, pour chaque groupe d'utilisateurs.

Lors de l'étape 160 suivante, le module de traitement 22 associe à chaque objet dudit environnement de traitement 13 au moins un marqueur.

En particulier, plusieurs marqueurs peuvent être associés à au moins certains des objets.

Lors de l'étape 170 suivante, le module de sécurisation 23 sécurise les règles d'accès et les associations des marqueurs à des objets, par exemple par application d'un mécanisme de signature électronique.

En particulier, l'application du mécanisme de signature électronique à chaque règle d'accès comprend :
- génération d'un code hash à partir du contenu de la règle d'accès ;
- signature du code hash avec un algorithme cryptographique à base de clés asymétriques et/ou symétriques.

L'application du mécanisme de signature électronique à chaque association d'un ou de plusieurs marqueurs à un objet comprend :
- génération d'un code hash à partir d'un identifiant unique de l'objet et de l'ensemble des marqueurs lui associés ;
- signature du code hash avec un algorithme cryptographique à base de clés asymétriques et/ou symétriques.

En complément, le même mécanisme de sécurisation est également appliqué à la politique de labellisation.

On conçoit alors que la présente invention présente un certain nombre d'avantages.

Tout d'abord, l'invention permet de mettre en oeuvre une politique de labellisation décrite dans un fichier SPIF dans un environnement de traitement de données de type Big Data.

La labellisation ainsi créée permet d'obtenir un contrôle fin d'accès à des données de sensibilités différentes et cela sans créer des cloisonnements de ces données. Ainsi, l'ensemble de ces données peuvent être traitées par des méthodes habituelles de traitement de données de type Big Data sans restriction sur un type particulier de données.

Enfin, l'invention permet de sécuriser l'ensemble des associations et des règles d'accès créées. Cette sécurisation est faite pat l'ajout des signatures électroniques dont l'authenticité peut être vérifiée lorsqu'il est nécessaire d'obtenir l'accès à l'objet correspondant.

## Revendications

1. Procédé de labellisation (100) d'objets dans un environnement de traitement (13) de grands volumes de données selon une politique de labellisation décrite dans un fichier de type SPIF, Security Policy Information File (14), ladite politique de labellisation définissant une pluralité d'attributs attribuables à des objets et des règles d'association de ces attributs, au moins certains des attributs étant de type classification, chaque attribut de type classification définissant une valeur déterminant un niveau hiérarchique de cet attribut par rapport aux autres attributs de type classification ;
le procédé (100) comprenant les étapes suivantes :
- création (110) dans ledit environnement de traitement (13) d'un marqueur pour chaque attribut dudit fichier de type SPIF (14) ;
- création (120) dans ledit environnement de traitement (13) d'un groupe d'utilisateurs pour chaque attribut dudit fichier de type SPIF (14) ;
- détermination (130) pour chaque marqueur correspondant à un attribut de type classification d'une règle d'accès comprenant une autorisation d'accès pour chaque groupe d'utilisateurs correspondant à un attribut de type classification de niveau hiérarchique supérieur ou égal au niveau hiérarchique de l'attribut de type classification correspondant à ce marqueur ;
- association (160) à chaque objet dudit environnement de traitement (13) d'au moins un marqueur.

2. Procédé (100) selon la revendication 1, dans lequel au moins certains des attributs sont de type restrictif définissant chacun une liste de valeurs et une condition d'accès avec une logique de « ET » entre les valeurs de cette liste ;
le procédé (100) comprenant en outre l'étape suivante :
- détermination (140) pour chaque marqueur correspondant à un attribut de type restrictif d'une règle d'accès comprenant une autorisation d'accès pour le groupe d'utilisateurs correspondant au même attribut de type restrictif.

3. Procédé (100) selon la revendication 1 ou 2, dans lequel au moins certains des attributs sont de type permissif définissant chacun une liste de valeurs et une condition d'accès avec une logique de « OU » entre les valeurs de cette liste;
le procédé (100) comprenant en outre l'étape suivante :
- détermination (150) pour chaque marqueur correspondant à un attribut de type permissif d'une règle d'accès comprenant une autorisation d'accès pour chaque groupe d'utilisateurs correspondant à au moins l'une des valeurs de la liste de valeurs définie par cet attribut de type permissif.

4. Procédé (100) selon l'une quelconque des revendications précédentes, dans lequel l'autorisation d'accès de chaque règle d'accès autorise au moins un type action en relation avec l'objet auquel cette autorisation est appliquée, chaque type d'action est choisi dans la liste comprenant :
- lecture ;
- écriture ;
- exécution ;
de préférence, au moins un type d'action étant déterminé pour chaque groupe d'utilisateurs de la règle d'accès correspondante.

5. Procédé (100) selon l'une quelconque des revendications précédentes, comprenant en outre une étape de sécurisation (170) des règles d'accès et des associations des marqueurs à des objets, par application d'un mécanisme de signature électronique.

6. Procédé (100) selon la revendication 5, dans lequel l'application du mécanisme de signature électronique à chaque règle d'accès comprend :
- génération d'un code hash à partir du contenu de la règle d'accès ;
- signature du code hash avec un algorithme cryptographique à base de clés asymétriques et/ou symétriques.

7. Procédé (100) selon la revendication 5 ou 6, dans lequel l'application du mécanisme de signature électronique à chaque association d'un ou de plusieurs marqueurs à un objet comprend :
- génération d'un code hash à partir d'un identifiant unique de l'objet et de l'ensemble des marqueurs lui associés ;
- signature du code hash avec un algorithme cryptographique à base de clés asymétriques et/ou symétriques.

8. Procédé (100) selon l'une quelconque des revendications précédentes, dans lequel ledit environnement de traitement (13) est l'environnement Hadoop.

9. Procédé (100) selon la revendication 8, dans lequel :
- chaque marqueur est un élément de type « TAG » de l'environnement Hadoop;
- chaque groupe d'utilisateurs est un élément de type « User Groupe » de l'environnement Hadoop ; et
- chaque règle d'accès est un élément de type « Politique Ranger » de l'environnement Hadoop.

10. Système de labellisation (10) comprenant des moyens techniques (21, 22, 23) adaptés pour mettre en oeuvre le procédé (100) selon l'une quelconque des revendications 1 à 9.

## Patentansprüche

1. Verfahren zur Kennzeichnung (100) von Objekten in einer Verarbeitungsumgebung (13) für große Datenmengen gemäß einer Kennzeichnungsrichtlinie, die in einer Datei vom Typ SPIF, Security Policy Information File (14), beschrieben ist, wobei die Kennzeichnungspolitik eine Vielzahl von Attributen definiert, die zu Objekten und Regeln für die Zuordnung dieser Attribute zuordenbar sind, wobei mindestens einige der Attribute vom Typ Klassifikation sind, wobei jedes Attribut vom Typ Klassifikation einen Wert definiert, der eine hierarchische Ebene dieses Attributs in Bezug auf die anderen Attribute vom Typ Klassifikation bestimmt;
das Verfahren (100) umfassend die folgenden Schritte:
- Erzeugen (110) in der Verarbeitungsumgebung (13) einer Markierung für jedes Attribut der Datei vom Typ SPIF (14);
- Erstellen (120) in der Verarbeitungsumgebung (13) einer Benutzergruppe für jedes Attribut der Datei vom Typ SPIF (14);
- Bestimmen (130) für jede Markierung, die einem Attribut vom Typ Klassifikation entspricht, einer Zugriffsregel, umfassend eine Zugriffsberechtigung für jede Benutzergruppe, die einem Attribut vom Typ Klassifikation entspricht, dessen hierarchische Ebene größer als oder gleich wie die hierarchische Ebene des Attributs vom Typ Klassifikation ist, das dieser Markierung entspricht;
- Assoziieren (160) mit jedem Objekt der genannten Verarbeitungsumgebung (13) mindestens einer Markierung.

2. Verfahren (100) nach Anspruch 1, wobei mindestens einige der Attribute vom restriktiven Typ sind, die jeweils eine Liste von Werten und eine Zugriffsbedingung mit einer "AND"-Logik zwischen den Werten dieser Liste definieren;
das Verfahren (100) ferner umfassend den folgenden Schritt:
- Bestimmen (140) für jede Markierung, die einem Attribut eines restriktiven Typs entspricht, einer Zugriffsregel, die eine Zugriffsberechtigung für die Benutzergruppe umfasst, die demselben Attribut eines restriktiven Typs entspricht.

3. Verfahren (100) nach Anspruch 1 oder 2, wobei mindestens einige der Attribute vom permissiven Typ sind, die jeweils eine Liste von Werten und eine Zugriffsbedingung mit einer "OR"-Logik zwischen den Werten dieser Liste definieren;
das Verfahren (100) ferner umfassend den folgenden Schritt:
- Bestimmen (150) für jede Markierung, die einem Attribut von dem permissiven Typ entspricht, einer Zugriffsregel, umfassend eine Zugriffsberechtigung für jede Benutzergruppe, die mindestens einem der Werte in der Liste von Werten entspricht, die durch dieses Attribut von dem permissiven Typ definiert ist.

4. Verfahren (100) nach einem der vorherigen Ansprüche, wobei die Zugriffsberechtigung jeder Zugriffsregel mindestens einen Aktionstyp in Bezug auf das Objekt zulässt, auf das diese Berechtigung angewendet wird, wobei jeder Aktionstyp aus der Liste ausgewählt ist, umfassend:
- Lesen;
- Schreiben;
- Ausführen; wobei vorzugsweise mindestens ein Aktionstyp für jede Benutzergruppe der entsprechenden Zugriffsregel bestimmt wird.

5. Verfahren (100) nach einem der vorherigen Ansprüche, das außerdem einen Schritt zur Sicherung (170) der Zugriffsregeln und der Zuordnungen der Marker zu Objekten durch Anwendung eines Mechanismus für elektronische Signaturen umfasst.

6. Verfahren (100) nach Anspruch 5, wobei die Anwendung des Mechanismus der elektronischen Signatur auf jede Zugriffsregel Folgendes umfasst:
- Erzeugen eines Hashcodes anhand des Inhalts der Zugriffsregel;
- Signieren des Hashcodes mit einem kryptografischen Algorithmus basierend auf asymmetrischen und/oder symmetrischen Schlüsseln.

7. Verfahren (100) nach Anspruch 5 oder 6, wobei die Anwendung des Mechanismus der elektronischen Signatur auf jede Zuordnung einer oder mehrerer Markierungen zu einem Objekt Folgendes umfasst:
- Erzeugen eines Hash-Codes aus einer eindeutigen Kennung des Objekts und allen ihm zugeordneten Markierungen;
- Signieren des Hashcodes mit einem kryptografischen Algorithmus basierend auf asymmetrischen und/oder symmetrischen Schlüsseln.

8. Verfahren (100) nach einem der vorherigen Ansprüche, wobei die Verarbeitungsumgebung (13) die Hadoop-Umgebung ist.

9. Verfahren (100) nach Anspruch 8, wobei:
- jede Markierung ein Element vom Typ "TAG" der Hadoop-Umgebung ist;
- jede Benutzergruppe ein Element vom Typ "Benutzergruppe" der Hadoop-Umgebung ist; und
- jede Zugriffsregel ein Element vom Typ "Ranger-Richtline" in der Hadoop-Umgebung ist.

10. Markierungssystem (10), umfassend technische Einrichtungen (21, 22, 23), die zur Durchführung des Verfahrens (100) nach einem der Ansprüche 1 bis 9 angepasst sind.

## Claims

1. A method for labelling (100) objects in a large data-volume processing environment (13) according to a labelling policy described in a Security Policy Information File (14), said labelling policy defining a plurality of attributes attributable to objects and rules for associating these attributes, at least some of the attributes being of the classification type, each classification type attribute defining a value determining a hierarchical level of this attribute with respect to the other classification type attributes;
the method (100) comprising the following steps:
- creating (110) in said processing environment (13) a marker for each attribute of said SPIF file (14);
- creating (120) in said processing environment (13) a user group for each attribute of said SPIF file (14);
- determining (130) for each tag corresponding to a classification type attribute an access rule comprising an access authorisation for each group of users corresponding to a classification type attribute of hierarchical level higher than or equal to the hierarchical level of the classification type attribute corresponding to this tag;
- association (160) with each object in said processing environment (13) of at least one marker.

2. A method (100) according to claim 1, wherein at least some of the attributes are of a restrictive type each defining a list of values and an access condition with an "AND" logic between the values in this list;
the method (100) further comprises the following step:
- determining (140) for each tag corresponding to a restrictive type attribute an access rule comprising an access permission for the group of users corresponding to the same restrictive type attribute.

3. A method (100) according to claim 1 or 2, wherein at least some of the attributes are of the permissive type each defining a list of values and an access condition with an "OR" logic between the values of this list;
the method (100) further comprises the following step:
- determining (150) for each tag corresponding to a permissive type attribute an access rule comprising an access authorisation for each group of users corresponding to at least one of the values of the list of values defined by that permissive type attribute.

4. A method (100) according to any one of the preceding claims, wherein the access authorisation of each access rule authorises at least one type of action in relation to the object to which this authorisation is applied, each type of action is selected from the list comprising:
- reading;
- writing;
- execution;
preferably with at least one type of action being determined for each user group of the corresponding access rule.

5. A method (100) according to any one of the preceding claims, further comprising a step of securing (170) the access rules and the associations of the markers to objects, by applying an electronic signature mechanism.

6. The method (100) of claim 5, wherein applying the electronic signature mechanism to each access rule comprises:
- generation of a hash code from the content of the access rule;
- signing the hash code with a cryptographic algorithm based on asymmetric and/or symmetric keys.

7. A method (100) according to claim 5 or 6, wherein applying the electronic signature mechanism to each association of one or more markers with an object comprises:
- generation of a hash code from a unique identifier of the object and the set of markers associated with it;
- signing the hash code with a cryptographic algorithm based on asymmetric and/or symmetric keys.

8. A method (100) according to any one of the preceding claims, in which said treatment environment (13) is the Hadoop environment.

9. A method (100) according to claim 8, wherein:
- each tag is a "TAG" type element of the Hadoop environment;
- each user group is a "User Group" type element of the Hadoop environment; and
- each access rule is a "Policy Ranger" element of the Hadoop environment.

10. Labelling system (10) comprising technical means (21, 22, 23) adapted to implement the method (100) according to any one of claims 1 to 9.
